(19) Europäisches Patentamt
European Patent Office
Office européen des brevets

(11) Veröffentlichungsnummer: **0 054 858**
**B1**

(12) # EUROPÄISCHE PATENTSCHRIFT

(45) Veröffentlichungstag der Patentschrift: **11.07.84**

(51) Int. Cl.³: **C 09 B 29/36**, C 09 B 31/14 // D06P3/06

(21) Anmeldenummer: **81110332.4**

(22) Anmeldetag: **11.12.81**

(54) **Saure Azofarbstoffe mit Imidazopyridin-Kupplungskomponenten sowie deren Herstellung und Verwendung zum Färben von Polyamidfasern.**

(30) Priorität: **24.12.80 DE 3049194**

(43) Veröffentlichungstag der Anmeldung: **30.06.82 Patentblatt 82/26**

(45) Bekanntmachung des Hinweises auf die Patenterteilung: **11.07.84 Patentblatt 84/28**

(84) Benannte Vertragsstaaten: ***CH DE FR GB LI***

(56) Entgegenhaltungen:
**US - A - 3 804 823**
**US - A - 3 936 435**

***Die Akte enthält technische Angaben, die nach dem Eingang der Anmeldung eingereicht wurden und die nicht in dieser Patentschrift enthalten sind.***

(73) Patentinhaber: **BAYER AG, Konzernverwaltung RP Patentabteilung, D-5090 Leverkusen 1 Bayerwerk (DE)**

(72) Erfinder: **Runzheimer, Volker, Dr., In der Hildscheid 2, D-5068 Odenthal (DE)**
Erfinder: **Wolfrum, Gerhard, Dr., Domblick 17, D-5090 Leverkusen 3 (DE)**

**EP 0 054 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Säurefarbstoffe der Formel

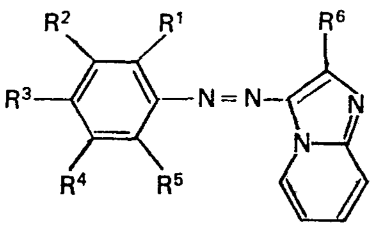

(I)

worin

$R_1$, $R_3$ und $R_4$ unabhängig voneinander Wasserstoff, $CF_3$, Alkyl, Aryl, Halogen, CN, Alkoxy, Aryloxy, $NO_2$, $SO_3H$, $SO_2NQ_1Q_2$, Alkoxysulfonyl, Aryloxysulfonyl, Sulfoarylazo, Alkylsulfonylaminosulfonyl, Arylsulfonylaminosulfonyl, Sulfoalkylaminosulfonyl oder Sulfoarylaminosulfonyl

($Q_1/Q_2$ = H, Aryl, Sulfonyl, Alkyl oder Sulfoalkyl, wobei $Q_1$ und $Q_2$ gleich oder verschieden sein können)

$R_2$ und $R_5$ unabhängig voneinander Wasserstoff, Halogen, $CF_3$, CN, Nitro, Alkoxy oder Aryloxy und

$R_6$ Wasserstoff, Alkyl oder Aryl bedeuten,

mit der Massgabe, dass mindestens eine der genannten sauren Gruppen vorhanden ist.

Geeignete in beliebigem Zusammenhang genannte Alkyl- und Alkoxygruppen sind solche mit 1–4 C-Atomen.

Geeignete Aralkylgruppen sind Benzyl und Phenylethyl.

Geeignete Cycloalkylgruppen sind Cyclohexylreste.

Geeignete Acylaminogruppen sind Alkyl- und Arylcarbonylaminogruppen.

Geeignete Arylgruppen sind Phenylreste, die gegebenenfalls 1–3fach durch Alkyl, Alkoxy oder Halogen oder einmal durch $SO_3H$ substituiert sind.

Unter «Halogen» wird vor allem F, Br und insbesondere Cl verstanden.

Besonders bevorzugte Farbstoffe sind solche der Formel (II), worin

$R_2$ und $R_5$ Wasserstoff,

$R_1$ und $R_4$ Wasserstoff, Cl, $C_1$–$C_4$-Alkoxy, CN, $NO_2$, $SO_3H$ oder $C_1$–$C_4$-Alkyl

$R_3$ Wasserstoff, Cl, CN, $SO_3H$, $C_1$–$C_4$-Alkoxysulfonyl, Phenoxysulfonyl, Tolyloxysulfonyl,

$-SO_2NVCH_2CH_2SO_3H$ oder $-SO_2NV-$ 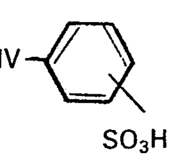

($V = H$ oder $CH_3$)

$R^6$ $C_1$–$C_4$-Alkyl oder gegebenenfalls durch $C_1$–$C_4$-Alkyl, $C_1$–$C_4$-Alkoxy oder Cl substituiertes Phenyl bedeuten, mit der Massgabe, dass mindestens eine der genannten sauren Gruppen vorhanden ist.

Ganz besonders bevorzugt sind Farbstoffe der Formel (II), worin

$R_1$ Wasserstoff oder Chlor,

$R_2$ und $R_5$ Wasserstoff,

$R_3$ $SO_3H$, $-SO_2NVCH_2CH_2SO_3H$

oder $-SO_2NV-$ 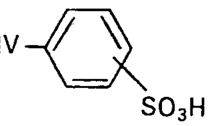

($V = H$ oder $CH_3$)

$R_4$ Nitro oder Chlor und

$R_6$ Methyl oder Phenyl bedeuten.

Die neuen Farbstoffe werden dadurch erhalten, dass man Amine der Formel

$D-NH_2$ (III),

worin

D die obengenannte Bedeutung besitzt,

in bekannter Weise diazotiert und im sauren bis neutralen Medium mit Kupplungskomponenten der Formel

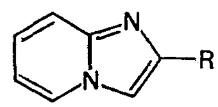

(IV),

wobei

R die bereits angegebene Bedeutung besitzt,

in wässrigem, wässrig-organischem oder rein organischem Medium kuppelt.

Die Kupplungskomponenten der Formel (IV) sind bekannt. Man erhält sie nach in der Literatur beschriebenen Verfahren (vgl. Chem. Ber. 58, 1704 (1925), ibid, 59, 2048 (1926), USP 3928311).

Ebenso sind die Diazokomponenten der Formel (III) bekannt. Die neuen Farbstoffe der Formel (I) eignen sich zum Färben und Bedrucken von natürlichen und synthetischen Fasermaterialien, insbesondere Stickstoffatome aufweisende Fasermaterialien wie Wolle, Seide, Leder und Polyamidfasern, wobei unter Polyamidfasern insbesondere solche aus synthetischen Polyamiden wie ε-Polycaprolactam oder Kondensationsprodukten aus Adipinsäure und Hexamethylendiamin verstanden werden.

Die Farbstoffe zeichnen sich durch hohe Farbstärke aus und ziehen bereits aus neutralem bis schwach saurem Färbebad gut auf, wobei sie gelbe und rote Färbungen von guter Qualität und guten Lichtechtheiten liefern.

Von den konstitutionell nächstliegenden Farbstoffen der US-A 3804823 unterscheiden sich die erfindungsgemässen Farbstoffe durch die speziell ausgewählten Diazokomponenten und die Anwesenheit mindestens einer Säuregruppe, weswegen sie mit den kationischen und nichtionischen Farbstofftypen dieser Publikation unter anwendungstechnischen Gesichtspunkten nicht gut vergleichbar sind.

Beispiel 1

34,9 g N-(4-Amino-2,5-dichlor-phenyl-sulfonyl)-aminoethansulfonsäure werden in 200 ml Wasser mit Natronlauge bei pH 7 gelöst, 7,0 g Natriumnitrit zugegeben, nach Abkühlung auf 5 °C 30 ml Salzsäure (37%ig) zugesetzt und 15 Minuten bei 0–5 °C diazotiert. Danach gibt man zur klaren Diazolösung 13,2 g 2-Methyl-imidazo-[1,2-a]-pyridin, in ca. 30 ml 10% HCl gelöst, zu und vervollständigt die Kupplung durch Abstumpfen mit Natriumacetatlösung auf pH 4–5. Der ausgefallene Farbstoff der Formel

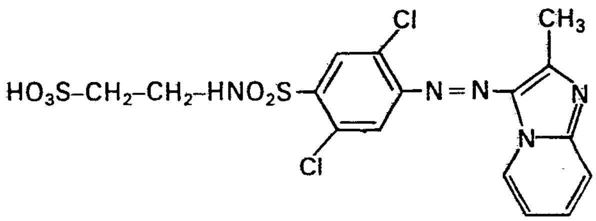

wird abgesaugt und getrocknet. Er färbt Polyamidfasern und Polyamidgewebe aus schwach saurem oder neutralem Bad in rotstichig gelben Tönen mit guter Licht- und Waschechtheit.

Wenn man wie in Beispiel 1 verfährt, jedoch als Diazokomponente und als Kupplungskomponente die in Tabelle 1 aufgeführten Verbindungen einsetzt, erhält man ebenfalls wertvolle wasserlösliche Monoazofarbstoffe, die Polyamid in grünstichig bis stark rotstichig gelben oder orangen Tönen färben.

Tabelle 1

| Beispiel | Diazokomponente | Kupplungskomponente | Nuance auf PA |
|---|---|---|---|
| 2 | 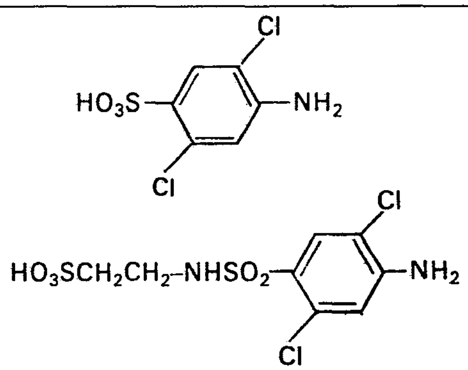 | 2-Methyl-imidazo [1,2-a]-pyridin | gelb |
| 3 | | 2-Phenyl-imidazo [1,2-a]pyridin | sehr stark gelbstichig orange |
| 4 | 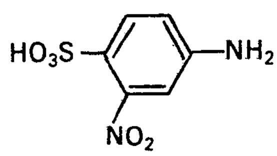 | 2-Methyl-imidazo [1,2-a]pyridin | etwas grünstichig gelb |
| 5 | 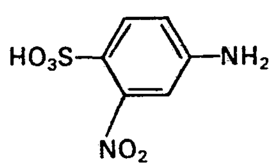 | 2-Phenyl-imidazo [1,2-a]pyridin | rotstichig gelb |
| 6 | 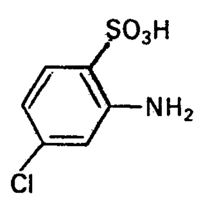 | 2-Phenyl-imidazo [1,2-a]pyridin | rotstichig gelb |

Tabelle 1 (Fortsetzung

| Beispiel | Diazokomponente | Kupplungskomponente | Nuance auf PA |
|---|---|---|---|
| 7 | 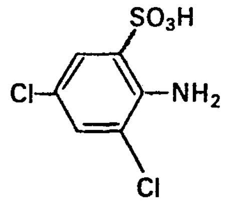 | 2-Phenyl-imidazo [1,2-a]pyridin | stark rotstichig gelb |
| 8 | 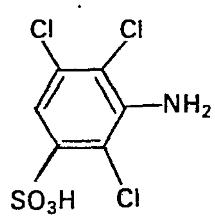 | 2-Methyl-imidazo [1,2-a]pyridin | gelb |
| 9 | 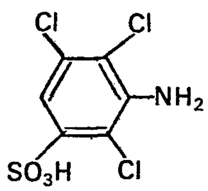 | 2-Phenyl-imidazo [1,2-a]pyridin | stark rotstichig gelb |
| 10 | 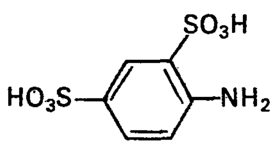 | 2-Methyl-imidazo [1,2-a]pyridin | gelb |
| 11 | 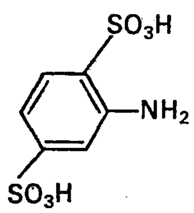 | 2-Phenyl-imidazo [1,2-a]pyridin | rotstichig gelb |
| 12 | 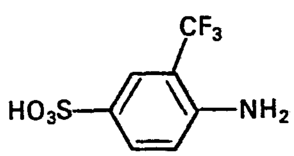 | 2-Methyl-imidazo [1,2-a]pyridin | gelb |
| 13 | 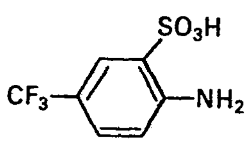 | 2-Phenyl-imidazo [1,2-a]pyridin | rotstichig gelb |
| 14 | 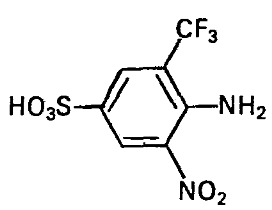 | 2-Methyl-imidazo [1,2-a]pyridin | rotstichig gelb |

Tabelle 1 (Fortsetzung)

| Beispiel | Diazokomponente | Kupplungs-komponente | Nuance auf PA |
|---|---|---|---|
| 15 | 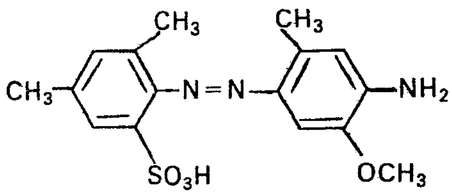 | 2-Phenyl-imidazo [1,2-a]pyridin | gelbstichig rot |
| 16 | 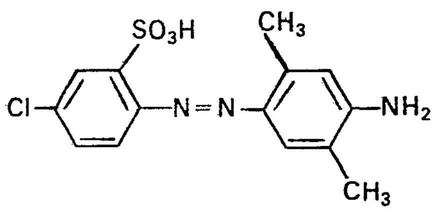 | 2-Phenyl-imidazo [1,2-a]pyridin | gelbstichig rot |
| 17 | 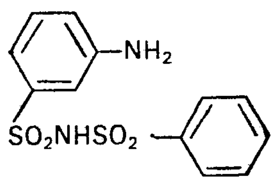 | 2-Methyl-imidazo [1,2-a]pyridin | gelb |
| 18 | 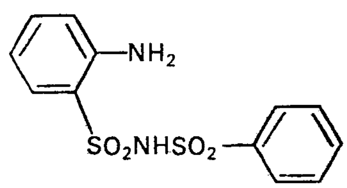 | 2-Phenyl-imidazo [1,2-a]pyridin | rotstichig gelb |

Beispiel 19

27,7 g 4-Amino-azobenzol-4'-sulfonsäure werden in 400 ml Wasser bei ca. 80 °C mit Natriumcarbonat neutral gelöst und mit 24 ml 30%iger Natriumnitritlösung unter Rühren auf eine Mischung aus ca. 150 g Eis, 30 ml konzentrierte Salzsäure und 150 ml Wasser gegeben, so dass die Diazotierung bei 25–30 °C erfolgt und nach 1 h beendet ist. Überschüssiges Natriumnitrit wird durch Zugabe von Aminosulfonsäure entfernt. Die Diazotierung wird zu einer Lösung von 19,4 g 2-Phenyl-imidazo[1,2-a]pyridin in ca. 50 ml Eisessig gegeben und zur Vervollständigung der Kupplung mit gesättigter Natriumacetatlösung auf pH 4–5 abgestumpft. Der ausgefallene Farbstoff der Formel

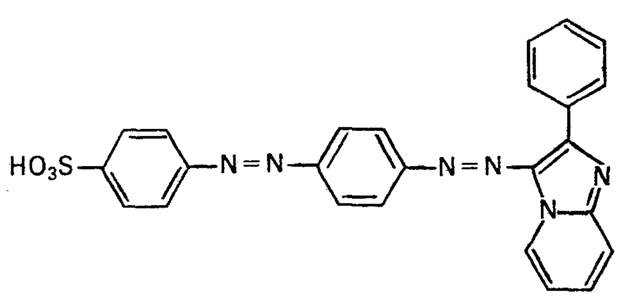

wird abgesaugt und getrocknet. Er färbt Polyamidfasern und Polyamidgewebe aus schwach saurem oder neutralem Bad in rot-orangen Tönen mit guten Allgemeinechtheiten.

Wenn man wie in Beispiel 19 angegeben verfährt, jedoch als Diazokomponente und als Kupplungskomponente die in der folgenden Tabelle 2 aufgeführten Verbindungen einsetzt, erhält man ebenfalls wertvolle wasserlösliche Monoazofarbstoffe, die Polyamid in gelben bis orangen oder roten lichtechten Tönen anfärben.

Tabelle 2

| Beispiel | Diazokomponente | Kupplungskomponente | Nuance auf PA |
|---|---|---|---|
| 20 | 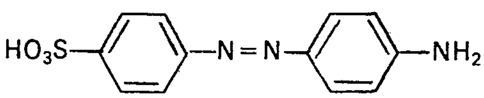 | 2-Methyl-imidazo [1,2-a]pyridin | gelb |
| 21 | 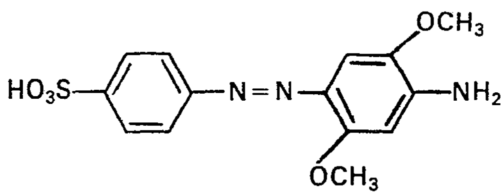 | 2-Methyl-imidazo [1,2-a]pyridin | rot |
| 22 | 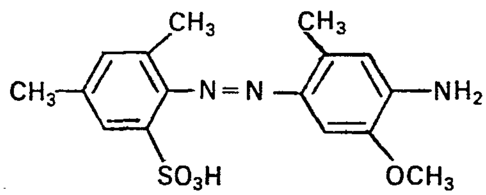 | 2-Methyl-imidazo [1,2-a]pyridin | orange |

**Patentansprüche**

1. Azofarbstoffe der Formel

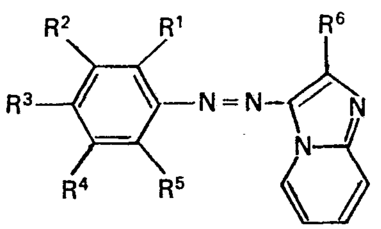

(I)

worin

$R_1$, $R_3$ und $R_4$ unabhängig voneinander Wasserstoff, $CF_3$, Alkyl, Aryl, Halogen, CN, Alkoxy, Aryloxy, $NO_2$, $SO_3H$, $SO_2NQ_1Q_2$, Alkoxysulfonyl, Aryloxysulfonyl, Sulfoarylazo, Alkylsulfonylaminosulfonyl, Arylsulfonylaminosulfonyl, Sulfoalkylaminosulfonyl oder Sulfoarylaminosulfonyl;

$Q_1$ und $Q_2$ unabhängig voneinander H, Aryl, Sulfonyl, Alkyl oder Sulfoalkyl;

$R_2$ und $R_5$ unabhängig voneinander Wasserstoff, $CF_3$, Halogen, CN, Nitro, Alkoxy oder Aryloxy und

$R_6$ Wasserstoff, Alkyl oder Aryl bedeuten,

mit der Massgabe, dass mindestens eine der genannten sauren Gruppen vorhanden ist.

2. Azofarbstoffe gemäss Ansprüchen 1 und 2, dadurch gekennzeichnet, dass

$R_2$ und $R_5$ Wasserstoff,

$R_1$ und $R_4$ Wasserstoff, Cl, $C_1$–$C_4$-Alkoxy, CN, $NO_2$, $SO_3H$ oder $C_1$–$C_4$-Alkyl,

$R_3$ Wasserstoff, Cl, CN, $SO_3H$, $C_1$–$C_4$-Alkoxysulfonyl, Phenoxysulfonyl, Tolyloxysulfonyl,

oder $-SO_2NVCH_2CH_2SO_3H$

oder 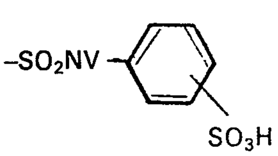

(V = H oder $CH_3$)

$R_6$ $C_1$–$C_4$-Alkyl oder gegebenenfalls durch $C_1$–$C_4$-Alkyl, $C_1$–$C_4$-Alkoxy oder Cl substituiertes Phenyl bedeuten,

mit der Massgabe, dass mindestens eine der genannten sauren Gruppen vorhanden ist.

3. Azofarbstoffe gemäss Ansprüchen 1 und 2, dadurch gekennzeichnet, dass

$R_1$ Wasserstoff oder Chlor,

$R_2$ und $R_5$ Wasserstoff,

$R_3$ $SO_3H$, $-SO_2NVCH_2CH_2SO_3H$

oder $-SO_2NV$ 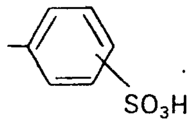

(V = H oder $CH_3$)
$R_4$ Nitro oder Chlor und
$R_6$ Methyl oder Phenyl bedeuten.

4. Azofarbstoffe gemäss Ansprüchen 1 und 2 der Formel

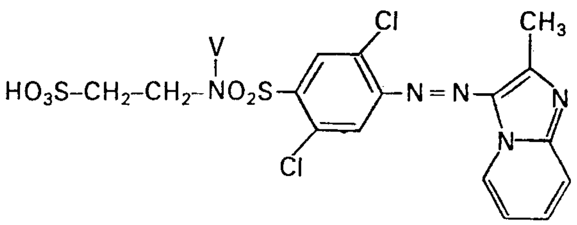

dadurch gekennzeichnet, dass
V Wasserstoff oder Methyl bedeutet.

5. Verfahren zur Herstellung von Azofarbstoffen gemäss Anspruch 1, dadurch gekennzeichnet, dass man Amine der Formel

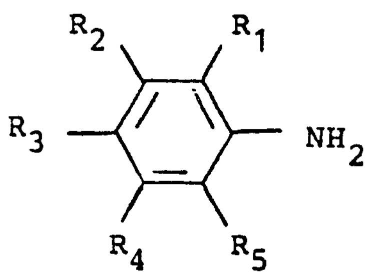 (III)

in bekannter Weise diazotiert und im sauren bis neutralem Medium mit Kupplungskomponenten der Formel

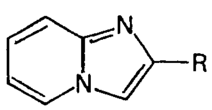 (IV),

in wässrigem, wässrig organischem oder rein organischem Medium kuppelt.

6. Verwendung der Azofarbstoffe gemäss Anspruch 1 zum Färben von Polyamidfasern

**Revendications**

1. Colorants azoïques de formule

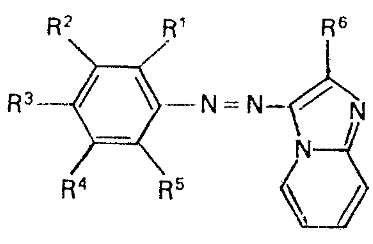 (I)

dans laquelle

$R_1$, $R_3$ et $R_4$ représentent, indépendamment les uns des autres, l'hydrogène, un groupe $CF_3$, alkyle, aryle, un halogène, un groupe CN, alcoxy, aryloxy, $NO_2$, $SO_3H$, $SO_2NQ_1Q_2$, alcoxysulfonyle, aryloxysulfonyle, sulfoarylazo, alkylsulfonylaminosulfonyle, arylsulfonylaminosulfonyle, sulfoalkylaminosulfonyle ou sulfoarylaminosulfonyle;

$Q_1$ et $Q_2$ représentent, indépendamment l'un de l'autre, H, un groupe aryle, sulfonyle, alkyl ou sulfoalkyle;

$R_2$ et $R_5$ représentent, indépendamment l'un de l'autre, l'hydrogène, un groupe $CF_3$, un halogène, un groupe CN, nitro, alcoxy ou aryloxy, et

$R_6$ représente l'hydrogène, un groupe alkyle ou aryle, étant spécifié que l'un au moins des groupes acides mentionnés existe.

2. Colorants azoïques selon les revendications 1 et 2, caractérisés en ce que:

$R_2$ et $R_5$ représentent l'hydrogène,

$R_1$ et $R_4$ représentent l'hydrogène, Cl, un groupe alcoxy en $C_1$–$C_4$, CN, $NO_2$, $SO_3H$ ou alkyle en $C_1$–$C_4$,

$R_3$ représente l'hydrogène, Cl, un groupe CN, $SO_3H$, alcoxysulfonyle en $C_1$–$C_4$, phénoxysulfonyle, tolyloxysulfonyle ou $-SO_2NVCH_2CH_2$

$SO_3H$ ou 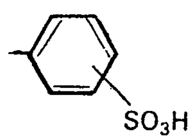

(V = H ou $CH_3$)

$R_6$ représente un groupe alkyle en $C_1$–$C_4$ ou un groupe phényle éventuellement substitué par un groupe alkyle en $C_1$–$C_4$, alcoxy en $C_1$–$C_4$ ou Cl, étant spécifié que l'un au moins des groupes acides mentionnés existe.

3. Colorants azoïques selon les revendications 1 et 2, caractérisés en ce que:

$R_1$ représente l'hydrogène ou le chlore,

$R_2$ et $R_5$ représentent l'hydrogène,

$R_3$ représente $SO_3H$, $-SO_2NVCH_2CH_2SO_3H$ ou

$-SO_2NV$ 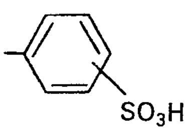

(V = H ou $CH_3$).

$R_4$ représente un groupe nitro ou le chlore, et

$R_6$ représente un groupe méthyle ou phényle.

4. Colorants azoïques selon les revendications 1 et 2, de formule

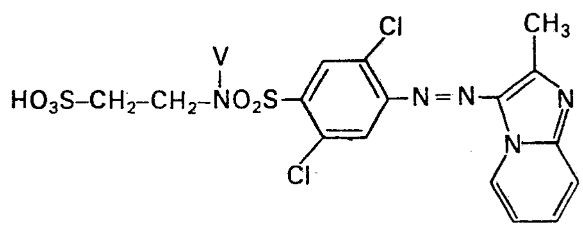

caractérisées en ce que:

V représente l'hydrogène ou le groupe méthyle.

5. Procédé de préparation des colorants azoïques selon la revendication 1, caractérisé en ce que l'on diazote de manière connue en soi des amines de formule

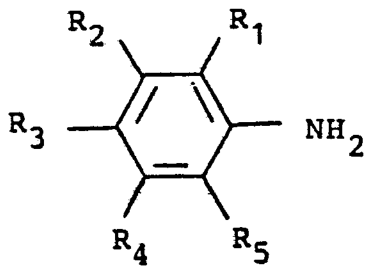

(III)

et on copule en milieu acide à neutre avec des copulants de formule

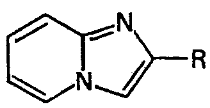

(IV),

en milieu aqueux, hydro-organique ou purement organique.

6. Utilisation des colorants azoïques selon la revendication 1, pour la teinture des fibres de polyamide.

## Claims

1. Azo dyestuffs of the formula

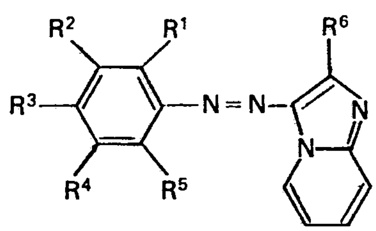

(I)

wherein

$R_1$, $R_3$ and $R_4$, independently of one another denote hydrogen, $CF_3$, alkyl, aryl, halogen, CN, alkoxy, aryloxy, $NO_2$, $SO_3H$, $SO_2NQ_1Q_2$, alkoxysulphonyl, aryloxysulphonyl, sulphoarylazo, alkylsulphonylaminosulfphonyl, arylsulphonylaminosulphonyl, sulphoalkylaminosulphonyl or sulphoarylaminosulphonyl;

$Q_1$ and $Q_2$ independently of one another denote H, aryl, sulphonyl, alkyl or sulphoalkyl;

$R_2$ and $R_5$ independently of one another denote hydrogen, $CF_3$, halogen, CN, nitro, alkoxy or aryloxy and

$R_6$ denotes hydrogen, alkyl or aryl, with the proviso that at least one of the indicated acid groups is present.

2. Azo dyestuffs according to Claims 1 and 2, characterised in that

$R_2$ and $R_5$ denote hydrogen,

$R_1$ and $R_4$ denote hydrogen, Cl, $C_1$–$C_4$-alkoxy, CN, $NO_2$, $SO_3H$ or $C_1$–$C_4$-alkyl,

$R_3$ denotes hydrogen, Cl, CN, $SO_3H$, $C_1$–$C_4$-alkoxysulphonyl, phenoxysulphonyl, tolyloxysulphonyl, or

$-SO_2NVCH_2CH_2SO_3H$ or $-SO_2NV$– 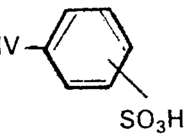

($V = H$ or $CH_3$)

$R_6$ denotes $C_1$–$C_4$-alkyl or phenyl which is optionally substituted by $C_1$–$C_4$-alkyl, $C_1$–$C_4$-alkoxy or Cl, with the proviso that at least one of the indicated acid groups is present.

3. Azo dyestuffs according to Claims 1 and 2, characterised in that

$R_1$ denotes hydrogen or chlorine,

$R_2$ and $R_5$ denote hydrogen,

$R_3$ denotes $SO_3H$, $-SO_2NVCH_2CH_2SO_3H$ or

$-SO_2NV$– 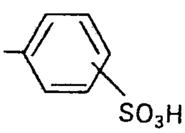

($V = H$ or $CH_3$)

$R_4$ denotes nitro or chlorine and

$R_6$ denotes methyl or phenyl.

4. Azo dyestuffs according to Claims 1 and 2, of the formula

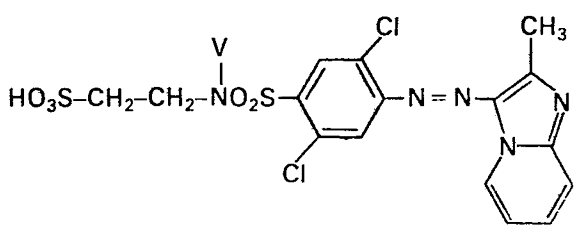

characterised in that

V denotes hydrogen or methyl.

5. Process for the preparation of azo dyestuffs according to Claim 1, characterised in that amines of the formula

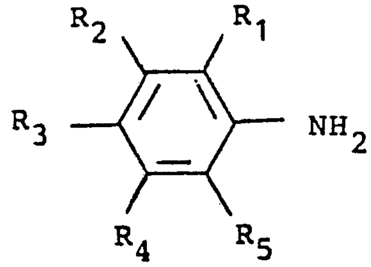

(III)

are diazotised in a known manner and the products are coupled in an acidic to neutral medium with coupling components of the formula

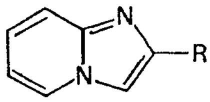

(IV),

in an aqueous, aqueous organic or purely organic medium.

6. Use of the azo dyestuffs according to Claim 1 for dyeing polyamide fibres.